Europäisches Patentamt

European Patent Office

Office européen des brevets

(19)

(11) Numéro de publication : **0 453 342 A1**

# (12) DEMANDE DE BREVET EUROPEEN

(21) Numéro de dépôt : **91400846.1**

(22) Date de dépôt : **28.03.91**

(51) Int. Cl.$^5$ : **B01D 25/172**

(30) Priorité : **20.04.90 FR 9005051**

(43) Date de publication de la demande : **23.10.91 Bulletin 91/43**

(84) Etats contractants désignés : **BE DE ES FR GB IT**

(71) Demandeur : **Société L. CHOQUENET (S.A.)**
**19 rue Charles Brunette**
**F-02301 Chauny Cedex (FR)**

(72) Inventeur : **Carle, Jean-Claude**
**Rue Gaston Trioux, Viry Noureuil**
**F-02301 Chauny (FR)**

(74) Mandataire : **Bugnon-Hays, Claudine**
**PATCO S.A. 39, Boulevard René Cassin B.P.4**
**F-84170 Monteux (FR)**

(54) **Perfectionnement des filtre-presses à plateaux.**

(57)    L'invention concerne un filtre-presse comprenant deux postes fixes reliés entre eux par au moins deux rails de guidage parallèles sur lesquels est montée coulissante une série de plateaux (1) munis de filtres et de poignées (3) et comportant au moins deux chariots (5) de débâtissage mobiles parallèlement aux rails (7, 8) de guidage et solidaires d'une chaîne (6) circulant dans les rails. Au moins les rails de guidage supérieurs (7) sont constitués par des pistes dont l'ouverture est située dans leur partie inférieure. Les chariots mobiles (5) sont pourvus d'un décrochement (11) permettant de les relier à la chaîne (6) par le dessous des rails.

FIG.1

EP 0 453 342 A1

La présente invention concerne le secteur technique des filtre-presses à plateaux utilisés pour filtrer les matières solides contenues dans un liquide sous forme de suspension.

Plus particulièrement l'invention concerne les filtre-presses à plateaux multiples dont le bâti est constitué de deux postes fixes reliés entre eux par au moins deux rails de guidage parallèles sur lesquels coulissent des plateaux de filtre.

Après l'opération de filtration, les plateaux peuvent être manipulés de façon à être séparés successivement les uns des autres et amenés d'un côté à l'autre du bâti pour permettre au gâteau qui s'est formé entre deux plateaux consécutifs, d'être évacué.

Lors de l'opération de filtration, les plateaux sont par contre collés les uns aux autres et maintenus dans cette position, de façon à permettre au liquide filtré de ne pas s'écouler entre les différents plateaux.

Les différentes étapes d'utilisation des filtre-presses consistent essentiellement dans l'étape de serrage des plateaux et dans l'étape de débâtissage des plateaux. Ces différentes étapes nécessitent l'utilisation d'un dispositif mettant en oeuvre des moyens permettant le guidage des plateaux. Ces moyens de guidage sont généralement constitués par deux rails situés de part et d'autre des plateaux et permettant leur translation horizontale.

Le déplacement des plateaux lors des opérations de serrage et de débâtissage peut être opéré manuellement, mais ces plateaux pouvant posséder une dimension importante et par conséquent être lourds, il a été proposé dans l'état de la technique plusieurs réalisations permettant de serrer les plateaux à l'aide d'un ou plusieurs vérins hydrauliques, puis une fois l'opération de filtration terminée, les séparer un par un pour permettre au gâteau d'être évacué à l'aide d'un système de déplacement automatique.

Ainsi le brevet français FR 2 377 831 déposé par la demanderesse en janvier 1977 décrit un filtre-presse à plateaux multiples comprenant des rails longitudinaux de guidage constitués par des longerons de support et de coulissement disposés de part et d'autre des plateaux, autorisant le coulissement des plateaux, grâce à la présence sur les bords latéraux de ceux-ci de règles de soutien leur permettant de s'appuyer sur les longerons constituant les rails de guidage. Afin de permettre le débâtissage, un chariot mobile à taquets est disposé de chaque côté des longerons et solidarisé à une chaîne munie ou non de galets, entraînée par un pignon, ce pignon étant mis en rotation par un moteur hydraulique. Le sens de rotation du moteur s'inverse par élévation de pression lorsque le taquet rentre en contact avec les poignées des plateaux.

Lors de l'utilisation d'un tel dispositif, il arrive que plusieurs gâteaux écartant les plateaux du fait de leur poids tombent avant que les chariots de débâtissage ne viennent séparer ces plateaux. Par ailleurs, lors de l'opération de débâtissage, l'évacuation des gâteaux provoque au bout d'un certain temps d'utilisation, l'encrassement des rails de guidage.

Afin de résoudre les problèmes de salissure, il a été également proposé dans l'état de la technique, un dispositif permettant d'éviter que les gâteaux ne salissent la partie inférieure des plateaux en frottant entre les plans de joints. Ce dispositif, décrit dans la demande de brevet français 87 04743 déposée par la demanderesse le 3 avril 1987, permet de maintenir serrée la série de plateaux à débâtir pendant le recul de la tête mobile et pendant que le chariot de transport prend l'un après l'autre les plateaux remplis de gâteaux.

Ce dispositif ne permet cependant pas d'éviter la salissure des rails de guidage pendant l'opération de débâtissage. En effet, la piste de guidage décrite, de par son profil, reçoit les projections provenant du filtre-presse dans les phases de filtration et de débâtissage. Ces projections de produit qui peuvent être très corrosives, très érosives ou très colloïdales, viennent détériorer rapidement et prématurément le chariot de débâtissage et surtout les chaînes et les galets de déplacement des chariots. Ces projections entraînent donc une perte importante du rendement du débâtissage et un coût de maintenance supérieur du système.

Le but de la présente invention est de proposer un dispositif ne présentant pas les inconvénients de l'état de la technique.

L'invention concerne un filtre-presse comprenant deux postes fixes reliés entre eux par au moins deux rails de guidage parallèles sur lequel est montée coulissante une série de plateaux munis de filtre et comportant au moins deux chariots de débâtissage, mobiles parallèlement aux rails de guidage et solidaires d'une chaîne circulant dans lesdits rails.

L'invention est caractérisée par le fait qu'au moins les rails de guidage supérieurs sont constitués par des pistes dont l'ouverture est située dans leur partie inférieure et en ce que les chariots mobiles sont pourvus d'un décrochement permettant de les relier à la chaîne.

La conformation particulière des pistes constituant les rails de guidage permet d'éviter à celles-ci d'accumuler les projections de produit.

Selon un mode de réalisation particulier de l'invention, la chaîne circulant dans les rails de guidage est munie de galets et les pistes constituant les rails de guidage ont sensiblement une section transversale en forme d'oméga.

Selon un mode de réalisation préférentiel de la présente invention, la chaîne circulant dans les rails de guidage n'est pas munie de galets et les pistes constituant les rails de guidage supérieurs sont munies au niveau de leurs ouvertures, d'un bac de section transversale en U dans lequel circule la chaîne.

D'autres particularités et avantages vont apparaître dans la description qui va suivre de deux exemples non limitatifs de réalisation de l'invention qui, en regard des figures annexées, permettront de bien comprendre comment l'invention peut être mise en pratique.

La figure 1 montre, en vue transversale, l'agencement d'un dispositif de filtre-presse au niveau des rails de guidage équipés d'une chaîne à galets.

La figure 2 montre, en vue transversale, l'agencement d'un filtre-presse au niveau des rails de guidage équipé d'une chaîne sans galet.

Un filtre-presse à plateaux multiples (1) comprend, des longerons (2) de support et de coulissement, disposés de part et d'autre des plateaux. Ces plateaux sont munis de poignées (3) de soutien permettant le coulissement et le guidage des plateaux sur lesdits longerons (2). Les extrémités de poignées (3) des plateaux (1) forment des butées (4) sur lesquelles des chariots de débâtissage (5) munis de taquets d'entraînement viennent agir. Comme on peut le voir sur la figure (1) le chariot de débâtissage (5) est solidaire d'une chaîne (6) entraînée par un pignon lui-même mis en rotation par un moteur hydraulique et dont le sens de rotation s'inverse par élévation de pression lorsque l'un des taquets du chariot de débâtissage rentre en contact avec les poignées des plateaux. Le chariot (5) roule dans un rail supérieur de guidage (7) et dans un rail inférieur de guidage (8) constitué par des pistes dont l'ouverture (9,10), est située dans la partie inférieure desdits rails.

Les chariots (5) sont pourvus d'un décrochement (11) permettant de les relier à la chaîne (6).

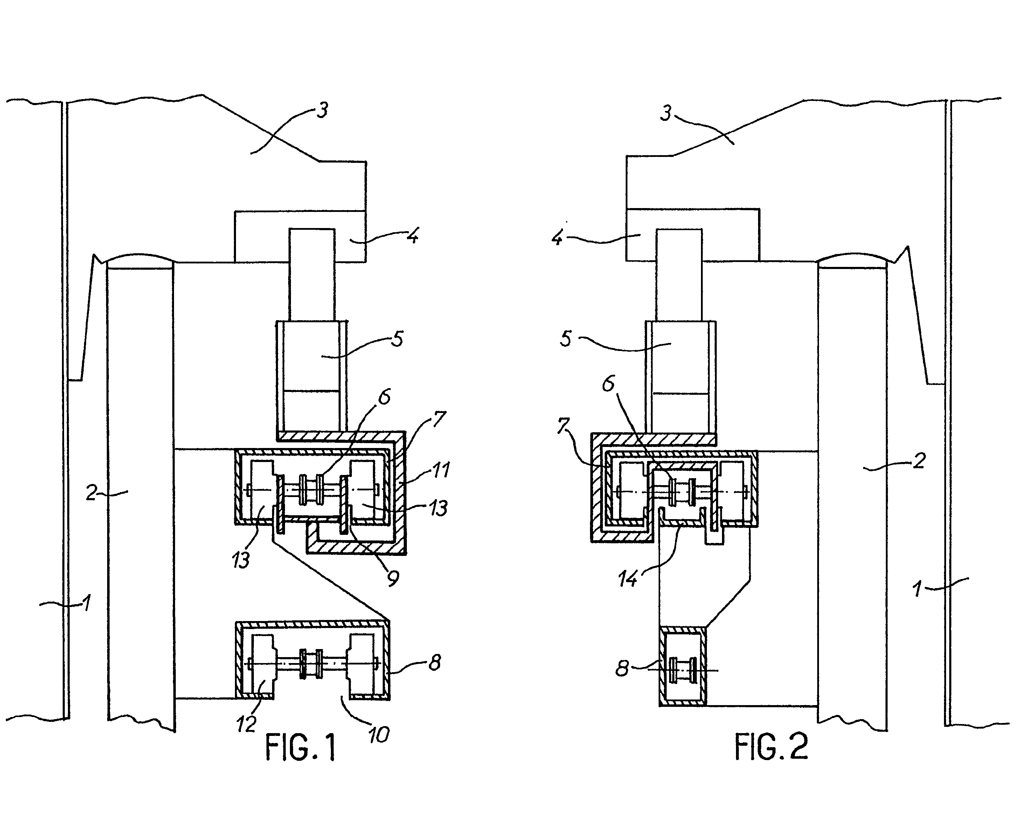

Toujours selon la figure 1, la chaîne (6) est munie de galets (12) et le chariot possède également des galets (13) et la piste constituant les rails de guidage (7, 8) a une section transversale sensiblement en forme d'oméga.

Selon la figure 2, la chaîne (6) n'est pas munie de galets et le rail supérieur de guidage (7) est muni au niveau de l'ouverture (9) d'un bac de section transversale en U (14) dans lequel circule la chaîne (6). Cette disposition particulièrement avantageuse évite à la chaîne de pendre sous le chariot de débâtissage.

## Revendications

1) Filtre-presse comprenant deux postes fixes reliés entre eux par au moins deux rails de guidage parallèles, sur lesquels est montée coulissante une série de plateaux (1) munis de filtres et de poignées (3) et comportant au moins deux chariots (5) de débâtissage mobiles parallèlement aux rails (7,8) de guidage et solidaires d'une chaîne (6) circulant dans lesdits rails, caractérisé en ce que au moins les rails de guidage supérieurs (7) sont constitués par des pistes dont l'ouverture est située dans leur partie inférieure et en ce que les chariots mobiles (5) sont pourvus d'un décrochement (11) permettant de les relier à la chaîne (6) par le dessous des rails, les poignées (3) se positionnant au dessus desdits rails.

2) Filtre-presse selon la revendication 1, caractérisé en ce que la chaîne (6) circulant dans les rails de guidage est munie de galets (12,13) et en ce que les pistes constituant les rails de guidage (7,8) ont sensiblement une section transversale en forme d'oméga.

3) Filtre-presse selon la revendication 1, caractérisé en ce que la chaîne (6) circulant dans les rails de guidage (7,8) n'est pas munie de galet et en ce que les pistes constituant les rails de guidage supérieurs (7) sont munies au niveau de leurs ouvertures (9) d'un bac de section transversale en U dans lequel circule la chaîne.

FIG.2

FIG.1

EP 0 453 342 A1

Office européen
des brevets

RAPPORT DE RECHERCHE EUROPEENNE

Numero de la demande

EP 91 40 0846

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2 101 003 (P.F. JONES) <br> * Figure 4; page 1, lignes 69-79 * <br> --- | 1,2 | B 01 D 25/172 |
| A | FR-A-1 366 866 (L. CHOQUENET) <br> --- | | |
| A | US-A-4 359 385 (B. KRIVEC) <br> ----- | | |

| | | | DOMAINES TECHNIQUES RECHERCHES (Int. Cl.5) |
|---|---|---|---|
| | | | B 01 D |

Le présent rapport a été établi pour toutes les revendications

| Lieu de la recherche | Date d'achèvement de la recherche | Examinateur |
|---|---|---|
| LA HAYE | 24-06-1991 | DE PAEPE P.F.J. |